# EUROPEAN PATENT APPLICATION

(11) **EP 4 797 424 A2**
(43) Date of publication of application: **26.08.2026**
(21) Application number: 26191078.0
(22) Date of filing: 16.09.2022
(51) Int. Cl.: H01M 50/531

(54) **BATTERY**

(30) Priority: 21.09.2021 JP 2021152817
(62) Document number(s) of the earlier application(s) in accordance with Art. 76 EPC: 22196088.3 / 4 152 486
(71) Applicant: Prime Planet Energy & Solutions, Inc., Chuo-ku, Tokyo 103-0022 (JP)
(72) Inventor: WAKIMOTO, Ryoichi, Tokyo, 103-0022 (JP)
(74) Representative: Kuhnen & Wacker Patent- und Rechtsanwaltsbüro PartG mbB

(57) **Abstract**

A battery is provided in which a damage on an electrode tab group is suitably inhibited. In one suitable embodiment of the battery herein disclosed, an insulating member is provided on a sealing plate. An insulation sheet arranged to cover an electrode body is joined to the insulating member, and the insulation sheet includes a sheet bottom wall, a pair of sheet first side walls that are configured to extend from the sheet bottom wall and are opposed mutually, and a pair of sheet second side walls that extend from the sheet bottom wall and are opposed mutually.

## Description

### BACKGROUND

The present disclosure relates to a battery.

### [Background Art]

A battery, such as a lithium ion secondary battery, generally includes an electrode body including an electrode, an outer package including an opening part and being for accommodating the electrode body, a sealing plate for sealing the opening part of the outer package, and a terminal being electrically connected to the electrode inside the outer package and extending from the sealing plate to the outside of the outer package. Regarding this type of the battery, a configuration is typically known in which the electrode is provided with an electrode tab group including a plurality of tabs for electrical collection, and in which the electrode is connected to the terminal through the electrode tab group. For example, Japanese Patent Application JP 2017-50069 A discloses a battery in which a positive electrode tab group is provided at one end part of the electrode body in the longitudinal direction and a negative electrode tab group is provided at the other end part. Then, a technique is disclosed in which the electrode tab group as described above is connected to the electrode electrical collector part in a state of being folded and bent.

### SUMMARY

When the battery is used, it is possible that a vibration, an impact, or the like is applied to the battery from the outside. The tab is configured, for example, as a part of the electrical collector body, is soft, and is often affected by the external force. Then, in consideration of the study performed by the present inventor, it has been found that the folded and bent portion of the tab (in other words, portion at which the tab is bent) is easily damaged when the electrode body is deviated from a predetermined disposed position by the external force (for example, external force applied in the longitudinal direction of the electrode body). There is a fear of making the electrical connection of the electrode and the terminal be unstable or become connection failure by doing this, which is not preferable.

The present disclosure has been made in view of said circumstances, and the main object is to provide a battery in which the damage on the electrode tab group is suitably inhibited.

The present disclosure provides a battery that includes one or plural electrode bodies provided with a positive electrode and a negative electrode, and a battery case configured to accommodate said one or plural electrode bodies. Said battery case includes an outer package that includes a bottom wall, a pair of first side walls configured to extend from said bottom wall and to be opposed mutually, a pair of second side walls configured to extend from said bottom wall and to be opposed mutually, and an opening part configured to be opposed to said bottom wall, and includes a sealing plate configured to seal said opening part, and a positive electrode terminal and a negative electrode terminal are attached to said sealing plate. Said one or plural electrode bodies each includes a positive electrode tab group that is configured to protrude from an end part opposed to one second side wall among said pair of second side walls, and includes a negative electrode tab group that is configured to protrude from an end part opposed to another second side wall among said pair of second side walls, said positive electrode tab group and said positive electrode terminal are electrically connected via a positive electrode electrical collector part, said positive electrode tab group is joined to said positive electrode electrical collector part in a state of being bent to arrange a part of said positive electrode tab group along said one second side wall, said negative electrode tab group and said negative electrode terminal are electrically connected via a negative electrode electrical collector part, and said negative electrode tab group is joined to said negative electrode electrical collector part in a state of being bent to arrange a part of said negative electrode tab group along said another second side wall. An insulating member is provided on said sealing plate. An insulation sheet is joined to said insulating member and is arranged to cover said one or plural electrode bodies, said insulation sheet includes at least a sheet bottom wall, and a pair of sheet first side walls that are configured to extend from said sheet bottom wall and are opposed mutually, and said pair of sheet first side walls are opposed to said pair of first side walls. Said insulating member includes a wide width surface formed in a rectangular shape, and a length of a short side of said wide width surface is smaller than a thickness of each said one or plural electrode bodies.

As described above, by the configuration in which the insulating member is provided on the sealing plate and the insulation sheet arranged to cover the electrode body is joined to the insulating member, it is possible to firmly fix the electrode body to the sealing plate, and thus it is possible, for example, to suitably inhibit the electrode body from being deviated from a predetermined arranged position by an external force applied in the longitudinal direction of the electrode body. By doing this, it is possible to suitably inhibit the damage on the electrode tab group. Moreover, when the short side length on the wide width surface of the insulating member is smaller than the thickness of the electrode body, a portion of the insulation sheet at the sealing plate side becomes a narrow shape. By doing this, the insulation sheet and the electrode body are firmly fixed, thus it is possible, for example, to further suitably inhibit the electrode body from being deviated from a predetermined arranged position by an external force applied in the longitudinal direction of the electrode body, and then, as the result, it is possible to further suitably inhibit the damage on the electrode tab group.

In one aspect of the herein disclosed battery, said insulation sheet further includes a sheet second side wall that is arranged between said pair of second side walls and said one or plural electrode bodies.

In the battery according to the aspect described above, said sheet second side wall is separated into an electrical collector area where said positive electrode tab group or said negative electrode tab group exists, and into a non electrical collector area where neither said positive electrode tab group nor said negative electrode tab group exists.

In one suitable aspect of the herein disclosed battery, said sheet bottom wall is formed in a rectangular shape, and a length of a short side of said sheet bottom wall is smaller than a thickness of each said one or plural electrode bodies. As described above, when the short side length on the sheet bottom wall of the insulation sheet is smaller than the thickness of the electrode body, a portion of the insulation sheet at the bottom wall side becomes a narrow shape. By doing this, the insulation sheet and the electrode body are firmly fixed, thus it is possible, for example, to further suitably inhibit the electrode body from being deviated from a predetermined arranged position by an external force applied in the longitudinal direction of the electrode body, and as the result, it is possible to further suitably inhibit the damage on the electrode tab group.

In one suitable aspect of the herein disclosed battery, at least a part of said insulation sheet is joined to said one or plural electrode bodies. In accordance with such a configuration, the insulation sheet and the electrode body are firmly fixed, and thus it is possible, for example, to further suitably inhibit the electrode body from being deviated from a predetermined arranged position by an external force applied in the longitudinal direction of the electrode body. By doing this, it is possible to further suitably inhibit the damage on the electrode tab group.

In one suitable aspect of the herein disclosed battery, for each of said pair of sheet first side walls, a fixing member is arranged from one sheet first side wall to another sheet first side wall. In accordance with such a configuration, the insulation sheet and the electrode body are firmly fixed, and thus it is possible, for example, to further suitably inhibit the electrode body from being deviated from a predetermined arranged position by an external force applied in the longitudinal direction of the electrode body. By doing this, it is possible to further suitably inhibit the damage on the electrode tab group.

In one suitable aspect of the herein disclosed battery, a move regulation member is arranged between said sheet second side wall and said one or plural electrode bodies. In accordance with such a configuration, it is possible, for example, to further suitably inhibit the electrode body from being deviated from a predetermined arranged position by an external force applied in the longitudinal direction of the electrode body. By doing this, it is possible to further suitably inhibit the damage on the electrode tab group.

In one aspect of the herein disclosed battery, said insulating member is arranged between said positive electrode electrical collector part and said negative electrode electrical collector part, and said sealing plate.

In one aspect of the herein disclosed battery, said insulating member is fixed to said sealing plate by adhesion or fitting.

### BRIEF DESCRIPTION OF THE DRAWINGS

FIG. 1 is a perspective view that schematically shows a battery in accordance with one embodiment.
FIG. 2 is a longitudinal cross section view that is schematically shown along a II-II line of FIG. 1.
FIG. 3 is a longitudinal cross section view that is schematically shown along a III-III line of FIG. 1.
FIG. 4 is a lateral cross section view that is schematically shown along a IV-IV line of FIG. 1.
FIG. 5 is a perspective view that schematically shows an electrode body group attached to a sealing plate.
FIG. 6 is a perspective view that schematically shows an electrode body to which a positive electrode second electrical collector part and a negative electrode second electrical collector part are attached.
FIG. 7 is a schematic view that shows a configuration of a wound electrode body.
FIG. 8 is a perspective view that schematically shows a sealing plate to which a positive electrode terminal, a negative electrode terminal, a positive electrode first electrical collector part, a negative electrode first electrical collector part, and an insulating member are attached.
FIG. 9 is a perspective view in which the sealing plate of FIG. 8 is reversed.
FIG. 10 is a schematic perspective view that is for explaining the sealing plate single body of FIG. 8.
FIG. 11 is a schematic perspective view that is for explaining the insulating member of FIG. 8.
FIG. 12 is a perspective view in which the insulating member of FIG. 11 is reversed.
FIG. 13 is a schematic development view that is for explaining the insulation sheet in accordance with Embodiment 1.
FIG. 14 is a schematic perspective view in a case where the insulation sheet of FIG. 13 is arranged to cover the electrode body group of FIG. 5.
FIG. 15 is a cross section view that schematically explains the insertion step of the battery in accordance with one embodiment.
FIG. 16 is a development view that is schematically shown for explaining an insulation sheet in accordance with Embodiment 2.
FIG. 17 is a development view of an insulation sheet in accordance with Embodiment 3 and is a schematic view that is for explaining a fixing member.
FIG. 18 is a development view of an insulation sheet in accordance with Embodiment 4 and is a schematic view that is for explaining the fixing member.
FIG. 19 is a development view that is schematically shown for explaining an insulation sheet in accordance with Embodiment 5.
FIG. 20 is a development view that is schematically shown for explaining an insulation sheet in accordance with Embodiment 6.
FIG. 21 is a schematic view that is for explaining a battery in accordance with another embodiment.
FIG. 22 is a schematic view that is for explaining a battery in accordance with another embodiment.

### DETAILED DESCRIPTION

Below, while referring to drawings, several preferred embodiments of herein disclosed techniques will be explained. Incidentally, the matters other than matters particularly mentioned in this specification, and required for practicing the present disclosure (for example, a general configuration and manufacturing process for the battery by which the present disclosure is not characterized) can be grasped as design matters of those skilled in the art based on the conventional technique in the present field. The present disclosure can be executed based on the contents disclosed in the present specification, and the technical common sense in the present field. The below described explanation is not intended to restrict the herein disclosed technique to the below described embodiments. In addition, the wording "A to B" representing a numerical value range in the present specification means a content equal to or more than A and not more than B. Therefore, a case where the numerical value range is more than A and less than B is semantically covered.

Incidentally, in the present specification, the "battery" is a term widely denoting an electric storage device capable of taking out the electric energy, and is a concept containing the primary battery and the secondary battery. In addition, in the present specification, the "secondary battery" is a term widely denoting an electric storage device capable of repeatedly charging and discharging, and is a concept containing so called storage batteries (chemical batteries), such as a lithium ion secondary battery and a nickel hydrogen battery, and containing capacitors (physical batteries), such as an electric double layer capacitor.

### <Battery 100>

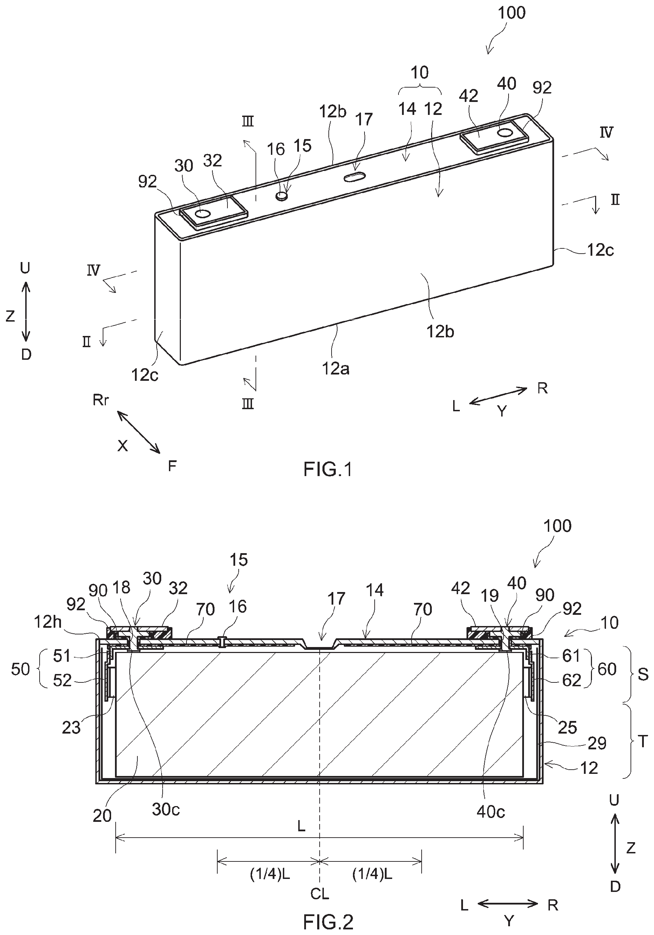

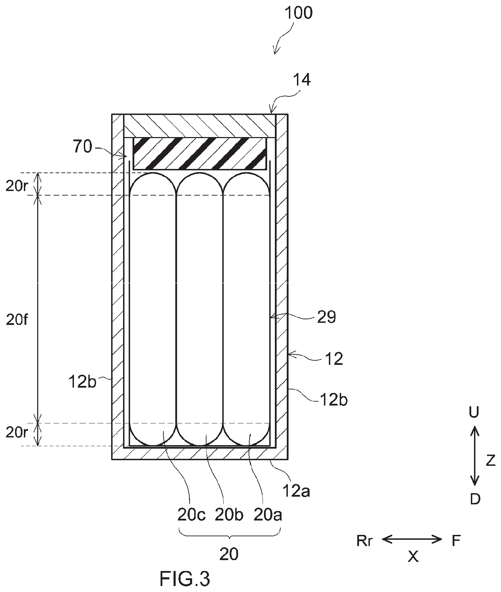

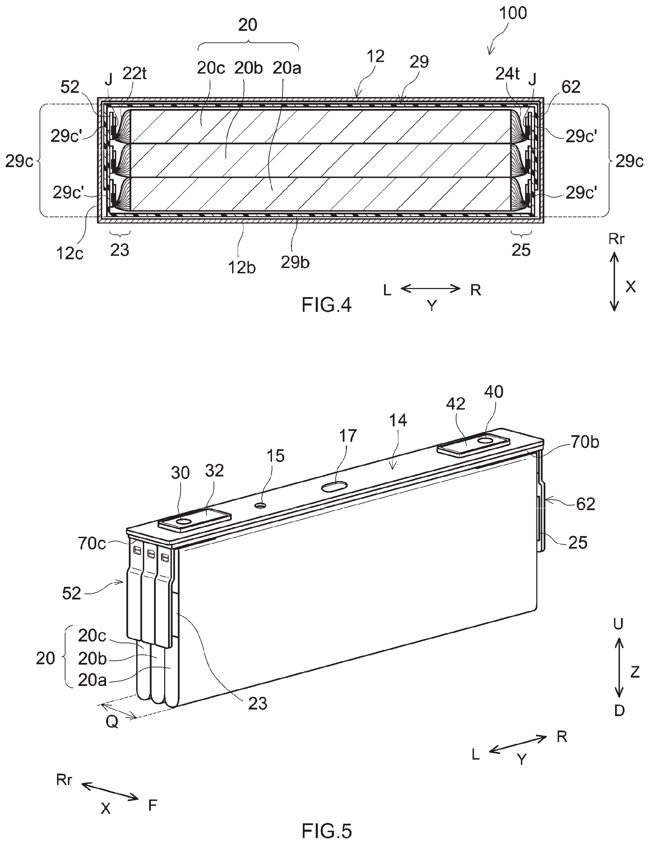

FIG. 1 is a perspective view of a battery 100. FIG. 2 is a longitudinal cross section view that is schematically shown along a II-II line of FIG. 1. FIG. 3 is a longitudinal cross section view that is schematically shown along a III-III line of FIG. 1. FIG. 4 is a lateral cross section view that is schematically shown along a IV-IV line of FIG. 1. Incidentally, in the below described explanation, the reference signs L, R, F, Rr, U, and D in drawings respectively represent left, right, front, rear, up, and down, and the reference signs X, Y, and Z in drawings respectively represent the short side direction, the long side direction orthogonal to the short side direction (which can be referred to as the longitudinal direction of the electrode body, too), and the vertical direction of the battery 100. However, these are merely directions for convenience sake of explanation, which never restrict the disposed form of the battery 100.

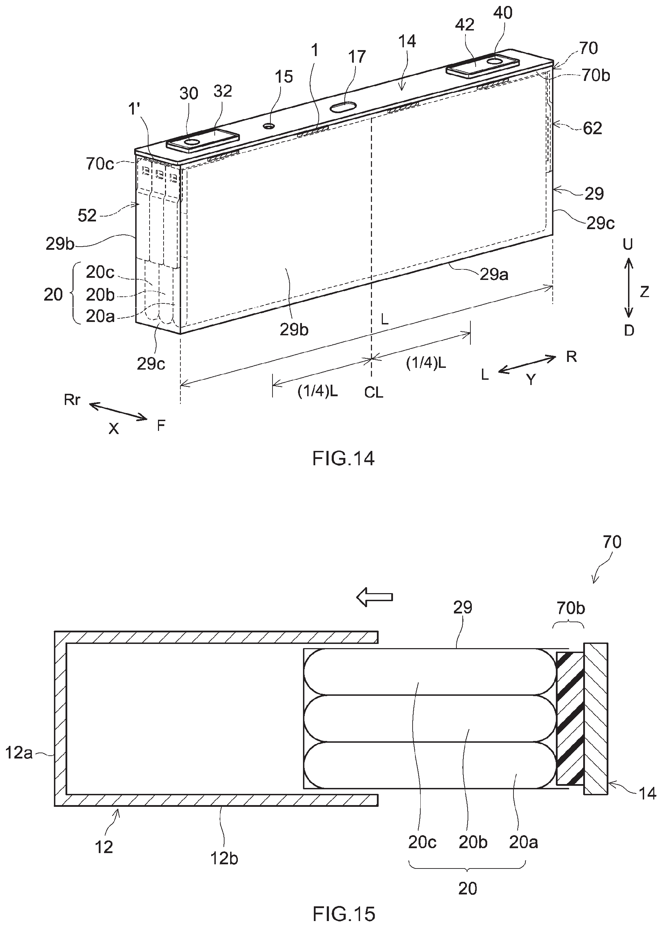

As shown in FIG. 2, the battery 100 includes a battery case 10, and an electrode body group 20 (for more details, electrode bodies 20a, 20b, 20c). In addition, the battery 100 in accordance with the present embodiment includes, in addition to the battery case 10 and the electrode body group 20, a positive electrode terminal 30, a positive electrode outside conductive member 32, a negative electrode terminal 40, a negative electrode outside conductive member 42, an outside insulating member 92, a positive electrode electrical collector part 50, a negative electrode electrical collector part 60, and an insulating member 70. In addition, as the illustration is omitted, the battery 100 in accordance with the present embodiment further includes an electrolyte. The battery 100 here is a lithium ion battery. Regarding the battery 100 in accordance with the present embodiment, the insulating member 70 is provided to a sealing plate 14, and an insulation sheet 29 arranged to cover the electrode bodies 20a, 20b, 20c is joined to the insulating member 70. In addition, the herein disclosed insulation sheet includes at least a sheet bottom wall and a pair of sheet first side walls that are configured to extend from said sheet bottom wall and that are mutually opposed. Then, although details are described later, the insulation sheet 29 in accordance with the present embodiment includes a sheet bottom wall 29a, a pair of sheet first side walls 29b that extend from the sheet bottom wall 29a and are mutually opposed, and a pair of sheet second side walls 29c that each is arranged between a second side wall 12c and an electrode body (here, the electrode body group 20) (see FIG. 14). As shown in FIG. 4, the sheet first side walls 29b are opposed to first side walls 12b, and the sheet second side walls 29c are opposed to second side walls 12c. The insulating member 70 and the insulation sheet 29 are respectively examples of insulating members and insulation sheets herein disclosed.

The battery case 10 is a housing that accommodates the electrode body 20. The battery case 10 has an appearance that is herein a flat and bottomed rectangular parallelopiped shape (square shape). It is enough that the material of the battery case 10 is the same as conventionally used one, which is not particularly restricted. It is preferable that the battery case 10 is made of metal having a predetermined strength. In particular, it is appropriate that a tensile strength of the metal used for the battery case 10 is about 50 N/mm² to 200 N/mm². In addition, it is suitable that a physical property value (rigidity rate) of the metal used for the battery case 10 is about 20 GPa to 100 GPa. As an example of this kind of metal material, it is possible to use aluminum, aluminum alloy, iron, iron alloy, or the like.

Then, the battery case 10 includes an outer package 12, a sealing plate 14, and a gas exhaust valve 17. The outer package 12 is a flat and square-shaped container in which one surface is made to be an opening part 12h. In particular, as shown in FIG. 1, the outer package 12 includes a bottom wall 12a that is approximately rectangular, a pair of first side walls 12b that extend upward U from short sides of the bottom wall 12a and that are mutually opposed, and a pair of second side walls 12c that extend upward U from long sides of the bottom wall 12a and that are mutually opposed. An area size of the second side wall 12c is smaller than an area size of the first side wall 12b. Then, the opening part 12h is formed at an upper surface of the outer package 12 surrounded by said pair of first side walls 12c and said pair of second side walls 12b. The sealing plate 14 is attached to the outer package 12 so as to block the opening part 12h of the outer package 12. The sealing plate 14 is a plate member that is approximately rectangular in a plane view. The sealing plate 14 is opposed to a bottom wall 12a of the outer package 12. The battery case 10 is formed by joining (e.g., welding and joining) the sealing plate 14 to a circumferential edge of the opening part 12h of the outer package 12. Joining the sealing plate 14 can be performed by welding, such as laser welding. In particular, the pair of second side walls 12c each is joined to a short side of the sealing plate 14, and the pair of first side walls 12b each is joined to a long side of the sealing plate 14.

As shown in FIG. 1 and FIG. 2, the gas exhaust valve 17 is formed on the sealing plate 14. The gas exhaust valve 17 is configured to open and exhaust gas inside the battery case 10, when a pressure inside the battery case 10 becomes equal to or more than a predetermined value. In addition, the sealing plate 14 is provided, in addition to said gas exhaust valve 17, with a liquid injection hole 15 and two terminal insert holes 18, 19. The liquid injection hole 15 communicates with an internal space of the outer package 12, and is an opening provided for liquid injection of the electrolyte at a manufacturing step of the battery 100. The liquid injection hole 15 is sealed by a sealing member 16. Regarding the sealing member 16 as described above, for example, a blind rivet is suitable.

FIG. 5 is a perspective view that schematically shows the electrode body 20 attached to the sealing plate 14. In the present embodiment, a plurality of (here, 3) electrode bodies 20a, 20b, 20c are accommodated inside the battery case 10. Incidentally, the number of the electrode bodies 20 accommodated inside one battery case 10, which is not particularly restricted, might be 1 or might be equal to or more than 2 (plural). Incidentally, as shown in FIG. 2, the positive electrode electrical collector part 50 is arranged at one side (left side in FIG. 2) of each electrode body 20 in a long side direction Y, and a negative electrode electrical collector part 60 is arranged at the other side (right side FIG. 2) in the long side direction Y. Then, the electrode bodies 20a, 20b, 20c are connected in parallel one by one. However, the electrode bodies 20a, 20b, 20c might be connected in series. The electrode body 20 is accommodated inside the outer package 12 of the battery case 10 in a state of being covered by the insulation sheet 29 (see FIG. 3). As a material configuring the insulation sheet 29, it is possible to use one that can be used as a material for the insulation sheet of this kind of battery, without particular restriction. As an example of a material configuring the insulation sheet 29, it is possible to use a resin-made film, such as polyethylene (PE). Incidentally, regarding insulation sheets 129, 229, 329, 429, 529 described later, it is possible to use similar materials.

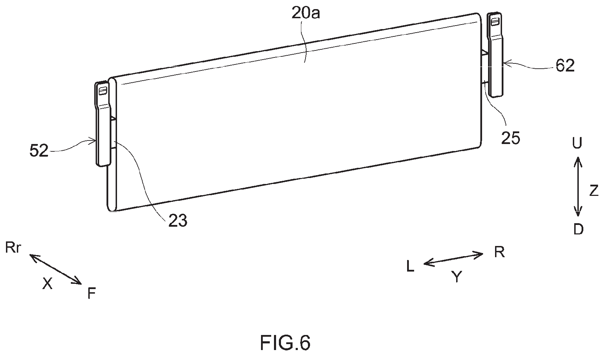

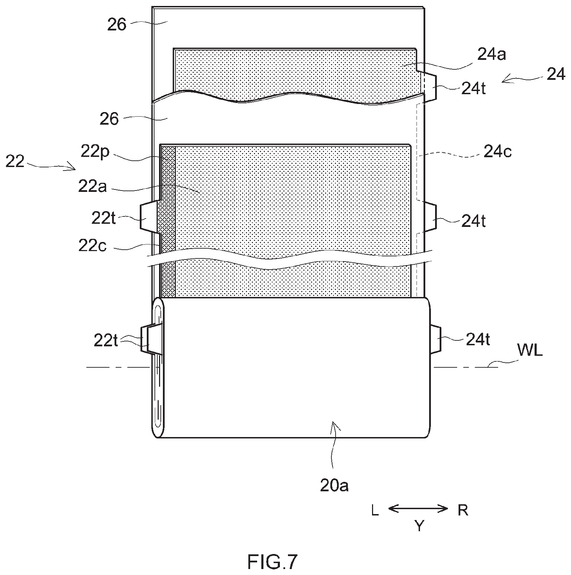

FIG. 6 is a perspective view that schematically shows the electrode body 20a. FIG. 7 is a schematic view that shows a configuration of the electrode body 20a. Incidentally, the electrode body 20a will be explained below in details as an example, but similar configurations can be applied to the electrode bodies 20b, 20c.

As shown in FIG. 7, the electrode body 20a includes a positive electrode 22, a negative electrode 24, and separators 26. The electrode body 20a here is a wound electrode body in which the strip-shaped positive electrode 22 and the strip-shaped negative electrode 24 are laminated through two strip-shaped separators 26 so as to be wound therein with the winding axis WL being as the center. However, the structure of the electrode body does not restrict the herein disclosed technique. For example, the electrode body might be a laminate electrode body in which a plurality of square-shaped (typically, rectangular) positive electrodes and a plurality of square-shaped (typically, rectangular) negative electrodes are stacked in a state of being insulated.

The electrode body 20a has a flat shape. The electrode body 20a is arranged inside the outer package 12, in a direction where the winding axis WL is approximately parallel to the long side direction Y. In particular, as shown in FIG. 3, the electrode body 20a includes a pair of bent parts (R parts) 20r that are opposed to the bottom wall 12a of the outer package 12 and to the sealing plate 14, and includes a flat part 20f that couples the pair of bent parts 20r and that is opposed to the second side wall 12b of the outer package 12. The flat part 20f extends along the second side wall 12b.

As shown in FIG. 7, the positive electrode 22 includes a positive electrode electrical collector body 22c, and includes a positive electrode active material layer 22a and a positive electrode protective layer 22p that are fixed to at least one surface of the positive electrode electrical collector body 22c. However, the positive electrode protective layer 22p is not essential, and thus the positive electrode protective layer can be omitted in another embodiment. The positive electrode electrical collector body 22c is formed in a strip-like shape. The positive electrode electrical collector body 22c consists of an electrically conductive metal, for example, aluminum, aluminum alloy, nickel, stainless steel, or the like. The positive electrode electrical collector body 22c here is a metal foil, in particular, an aluminum foil.

At one end part (left end part in FIG. 7) of the positive electrode electrical collector body 22c in the long side direction Y, a plurality of positive electrode tabs 22t are provided. The plurality of positive electrode tabs 22t are provided at the intervals (intermittently) along the longitudinal direction of the strip-shaped positive electrode 22. The plurality of positive electrode tabs 22t protrude, toward one side (left side in FIG. 7) of the winding axis WL in the axis direction, at an outside more than the separator 26. Incidentally, the positive electrode tabs 22t might be provided at the other side (right side if shown by FIG. 7) of the winding axis WL in the axis direction, or might be provided at both of opposite sides of the winding axis WL in the axis direction. The positive electrode tab 22t is a part of the positive electrode electrical collector body 22c and consists of a metal foil (aluminum foil). However, the positive electrode tab 22t might be a member different from the positive electrode electrical collector body 22c. On at least a part of the positive electrode tab 22t, an area is formed where neither the positive electrode active material layer 22a nor the positive electrode protective layer 22p is formed and the positive electrode electrical collector body 22c is exposed.

As shown in FIG. 4, the plurality of positive electrode tabs 22t are laminated at one end part (left end part in FIG. 4) of the winding axis WL in the axis direction, so as to configure the positive electrode tab group 23. The positive electrode tab group 23 protrudes from an end part opposed to one second side wall among the pair of second side walls 12c. Then, a part of the positive electrode tab group 23 (in particular, a portion coming into contact with a positive electrode second electrical collector part 52) is arranged to be along the second side wall. By doing this, it is possible to enhance the property for accommodating into the battery case 10 so as to miniaturize the battery 100. As shown in FIG. 2, the positive electrode tab group 23 is electrically connected to the positive electrode terminal 30 via the positive electrode electrical collector part 50. In particular, the positive electrode tab group 23 and the positive electrode second electrical collector part 52 are connected at a connecting part J (see FIG. 4). Then, the positive electrode second electrical collector part 52 is electrically connected to the positive electrode terminal 30 via a positive electrode first electrical collector part 51. Incidentally, sizes of the plurality of positive electrode tabs 22t (lengths along the long side direction Y and widths orthogonal to the long side direction Y, see FIG. 7) can be suitably adjusted, in consideration of the state of being connected to the positive electrode electrical collector part 50, for example, by the formed position, or the like. Here, sizes of the plurality of positive electrode tabs 22t are mutually different to make the ends at the outer sides be aligned when they are bent.

As shown in FIG. 7, the positive electrode active material layer 22a is provided in a strip-like shape along the longitudinal direction of the strip-shaped positive electrode electrical collector body 22c. The positive electrode active material layer 22a contains a positive electrode active substance that can reversibly store and emit a charge carrier (for example, lithium transition metal composite oxide, such as lithium-nickel-cobalt-manganese composite oxide). In a case where the whole solid content of the positive electrode active material layer 22a is treated as 100 mass%, the positive electrode active substance might occupy approximately 80 mass% or more, typically 90 mass% or more, or, for example, 95 mass% or more. The positive electrode active material layer 22a might contain an arbitrary component other than the positive electrode active substance, for example, an electrical conducting material, a binder, various additive components, or the like. As the electrical conducting material, it is possible, for example, to use a carbon material, such as acetylene black (AB). As the binder, it is possible, for example, to use polyvinylidene fluoride (PVdF), or the like.

As shown in FIG. 7, the positive electrode protective layer 22p is provided at a boundary portion between the positive electrode electrical collector body 22c and the positive electrode active material layer 22a in the long side direction Y. The positive electrode protective layer 22p here is provided at one end part (left end part in FIG. 7) of the winding axis WL of the positive electrode electrical collector body 22c in the axis direction. However, the positive electrode protective layer 22p might be provided at opposite ends in the axis direction. The positive electrode protective layer 22p is provided in a strip-like shape along the positive electrode active material layer 22a. The positive electrode protective layer 22p contains an inorganic filler (e.g., alumina). In the case where the whole solid content of the positive electrode protective layer 22p is treated as 100 mass%, it is allowed that the inorganic filler occupies approximately 50 mass% or more, typically 70 mass% or more, or, for example, 80 mass% or more. The positive electrode protective layer 22p might contain an arbitrary component other than the inorganic filler, for example, an electrical conducting material, a binder, various additive components, or the like. The electrical conducting material and the binder might be the same as those illustrated to be capable of being contained in the positive electrode active material layer 22a.

As shown in FIG. 7, the negative electrode 24 includes a negative electrode electrical collector body 24c, and a negative electrode active material layer 24a fixed on at least one surface of the negative electrode electrical collector body 24c. The negative electrode electrical collector body 24c is formed in a strip-like shape. The negative electrode electrical collector body 24c consists of an electrically conductive metal, for example, copper, copper alloy, nickel, stainless steel, or the like. The negative electrode electrical collector body 24c here is a metal foil, in particular, a copper foil.

At one end part (right end part in FIG. 7) of the winding axis WL of the negative electrode electrical collector body 24c in the axis direction, a plurality of negative electrode tabs 24t are provided. The plurality of negative electrode tabs 24t are provided at the intervals (intermittently) along the longitudinal direction of the strip-shaped negative electrode 24. The plurality of negative electrode tabs 24t each protrudes, toward one side (right side in FIG. 7) in the axis direction, at an outside more than the separator 26. However, the negative electrode tabs 24t might be provided at the other end part (left end part in FIG. 7) in the axis direction, and might be provided at both of the opposite ends in the axis direction. The negative electrode tab 24t is a part of the negative electrode electrical collector body 24c and consists of a metal foil (copper foil). However, the negative electrode tab 24t might be a member different from the negative electrode electrical collector body 24c. On at least a part of the negative electrode tab 24t, an area is provided where the negative electrode active material layer 24a is not formed and the negative electrode electrical collector body 24c is exposed.

As shown in FIG. 4, the plurality of negative electrode tabs 24t are laminated at one end part (right end part in FIG. 4) in the axis direction so as to configure a negative electrode tab group 25. The negative electrode tab group 25 protrudes from an end part opposed to the other second side wall among the pair of second side walls 12c. It is preferable that the negative electrode tab group 25 is provided at a position symmetrical with the positive electrode tab group 23 in the axis direction. Then, a part of the negative electrode tab group 25 (in particular, portion coming into contact with the negative electrode second electrical collector part 62) is arranged along the second side wall. By doing this, it is possible to enhance the property for accommodating into the battery case 10 so as to miniaturize the battery 100. As shown in FIG. 2, the negative electrode tab group 25 is electrically connected to the negative electrode terminal 40 via the negative electrode electrical collector part 60. In particular, the negative electrode tab group 25 and the negative electrode second electrical collector part 62 are connected at a connecting part J (see FIG. 4). Then, the negative electrode second electrical collector part 62 is electrically connected to the negative electrode terminal 40 via a negative electrode first electrical collector part 61. Similarly to the plurality of positive electrode tabs 22t, here, sizes of the plurality of negative electrode tabs 24t are mutually different to make the ends at the outer sides be aligned when they are bent.

As shown in FIG. 7, the negative electrode active material layer 24a is provided in a strip-like shape along the longitudinal direction of the strip-shaped negative electrode electrical collector body 24c. The negative electrode active material layer 24a contains a negative electrode active substance (for example, carbon material, such as graphite) that can reversibly store and emit a charge carrier. In the case where the whole solid content of the negative electrode active material layer 24a is treated as 100 mass%, the negative electrode active substance might occupy approximately 80 mass% or more, typically 90 mass% or more, or, for example, 95 mass% or more. The negative electrode active material layer 24a might contain an arbitrary component other than the negative electrode active substance, for example, a binder, a dispersing agent, various additive components, or the like. As the binder, it is possible, for example, to use rubbers, such as styrene butadiene rubber (SBR). As the dispersing agent, it is possible, for example, to use celluloses, such as carboxymethyl cellulose (CMC).

As shown in FIG. 7, the separator 26 is a member that insulates the positive electrode active material layer 22a of the positive electrode 22 and the negative electrode active material layer 24a of the negative electrode 24. As the separator 26, it is suitable to use a resin-made porous sheet consisting of polyolefin resin, such as polyethylene (PE) and polypropylene (PP). The separator 26 might include a base material part that consists of a resin-made porous sheet, and might include a heat resistance layer (HRL) that is provided on at least one surface of the base material part and contains an inorganic filler. As the inorganic filler, it is possible to use, for example, alumina, boehmite, water oxidation aluminum, titania, or the like.

It is enough that the electrolyte is similar to conventional one, which is not particularly restricted. The electrolyte is, for example, a nonaqueous electrolyte containing nonaqueous type solvent and supporting salt. The nonaqueous type solvent contains, for example, carbonates, such as ethylene carbonate, dimethyl carbonate, and ethyl methyl carbonate. The supporting salt is, for example, a fluorine-containing lithium salt, such as LiPF₆. However, the electrolyte might be in a solid state (solid electrolyte) and might be integrated with the electrode body 20.

As shown in FIG. 2, the positive electrode terminal 30 is inserted into a terminal insert hole 18 formed at one end part (left end part in FIG. 2) of the sealing plate 14 in the long side direction Y. It is preferable that the positive electrode terminal 30 is made of metal, and it is more preferable that the positive electrode terminal is made of aluminum or aluminum alloy. On the other hand, the negative electrode terminal 40 is inserted into a terminal insert hole 19 formed at the other end part (right end part in FIG. 2) of the sealing plate 14 in the long side direction Y. Incidentally, it is preferable that the negative electrode terminal 40 is made of metal, and it is more preferable that, for example, the negative electrode terminal is made of copper or copper alloy. These electrode terminals (positive electrode terminal 30 and negative electrode terminal 40) both here protrude from the same surface of the battery case 10 (in particular, sealing plate 14). However, the positive electrode terminal 30 and the negative electrode terminal 40 might respectively protrude from different surfaces of the battery case 10. In addition, it is preferable that the electrode terminals (positive electrode terminal 30, and negative electrode terminal 40) inserted into the terminal insert holes 18, 19 are fixed to the sealing plate 14 by the caulking process or the like.

As described above, while shown in FIG. 2, the positive electrode terminal 30 is electrically connected to the positive electrode 22 of each electrode body 20 (see FIG. 7) via the positive electrode electrical collector part 50 (positive electrode first electrical collector part 51, and positive electrode second electrical collector part 52) inside the outer package 12. The positive electrode terminal 30 is insulated from the sealing plate 14 by the insulating member 70 and the gasket 90. Then, the positive electrode terminal 30 exposed to the outside of the battery case 10 through the terminal insert hole 18 is connected to the positive electrode outside conductive member 32 at the outside of the sealing plate 14. On the other hand, as shown in FIG. 2, the negative electrode terminal 40 is electrically connected to the negative electrode 24 of each electrode body 20 (see FIG. 7) via the negative electrode electrical collector part 60 (negative electrode first electrical collector part 61, and negative electrode second electrical collector part 62) inside the outer package 12. The negative electrode terminal 40 is insulated from the sealing plate 14 by the insulating member 70 and the gasket 90. Then, the negative electrode terminal 40 exposed to the outside of the battery case 10 through the terminal insert hole 19 is connected to the negative electrode outside conductive member 42 at the outside of the sealing plate 14. Then, between the above-described outside conductive member (positive electrode outside conductive member 32, and negative electrode outside conductive member 42) and the outer surface of the sealing plate 14, an outside insulating member 92 exists. By the outside insulating member 92 as described above, it is possible to insulate the outside conductive members 32, 42 and the sealing plate 14.

Next, the insulating member 70 in accordance with the present embodiment will be described in details. As shown in FIG. 2, the insulating member 70 in accordance with the present embodiment is arranged between the positive electrode electrical collector part (for more details, positive electrode first electrical collector part 51) and negative electrode electrical collector part (for more details, negative electrode first electrical collector part 61), and the sealing plate 14. A material configuring the insulating member 70 is not particularly restricted, if the effect of the technique herein disclosed is implemented. It is preferable that the material configuring the insulating member 70 is a resin material having a resistant property to the used electrolyte, having an electric insulating property, and being able to be elastically deformed, and it is possible to use, for example, a polyolefin resin, such as polypropylene (PP), a fluorinated resin, such as tetrafluoroethylene-perfluoroalkoxyethylene copolymer (PFA), polyphenylene sulfide (PPS), or the like. Further, as the insulation sheet 29 described later, a sheet made of the above-mentioned resin material can be used.

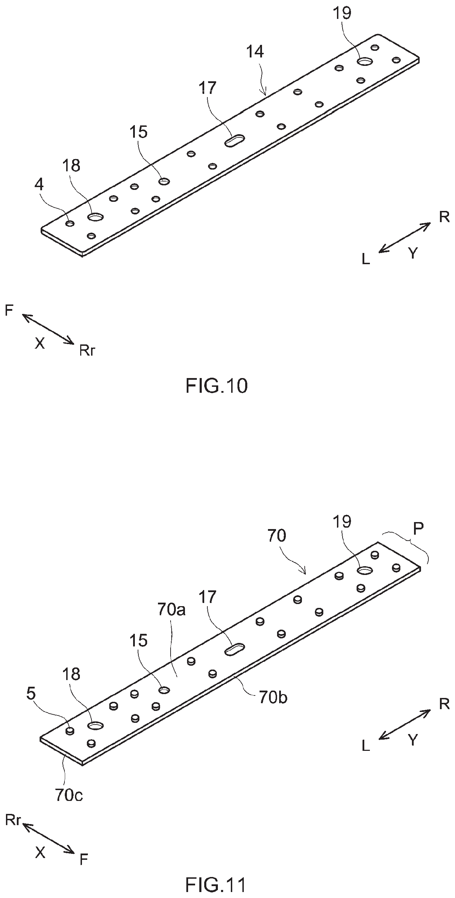

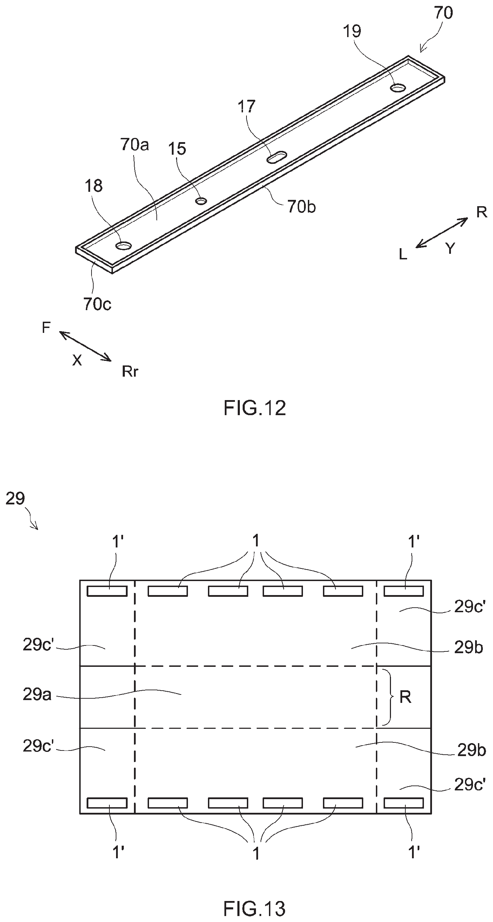

In addition, the insulating member 70 in accordance with the present embodiment is fixed with respect to the sealing plate 14 by fitting. Here, FIG. 11 is a schematic perspective view that is for explaining the insulating member 70, and FIG. 12 is a perspective view in which the insulating member 70 of FIG. 11 is reversed. As shown in FIG. 11, the insulating member 70 includes a width surface 70a being rectangular, a pair of side walls 70b, and a pair of side walls 70c. In addition, as shown in FIG. 11, on a surface of the wide width surface 70a, a plurality of protruding parts 5 used for fitting exist. A material configuring the protruding part 5 is not particularly restricted, if the effect of the technique herein disclosed is implemented, and it is possible to use, for example, the resin materials, or the like already mentioned for explaining the insulating member 70. The material configuring the protruding part 5 might be the same as, or different from, the materials configuring the insulating member 70. Additionally, in the present embodiment, a shape of the protruding part 5 is configured to be a column shape, but the shape is not restricted to this, and thus it is possible to configure it in various shapes, such as a square-shaped form and a rectangular parallelopiped shape. Then, the number of protruding parts 5 can be suitably changed on the basis of the used form. Incidentally, although the insulating member 70 in the present embodiment is fixed with respect to the sealing plate 14 by fitting, the insulating member herein disclosed might be, for example, adhered with respect to the sealing plate by an adhesion agent, or the like, so as to be fixed, or might be fixed by the combination of the above described fitting and adhesion.

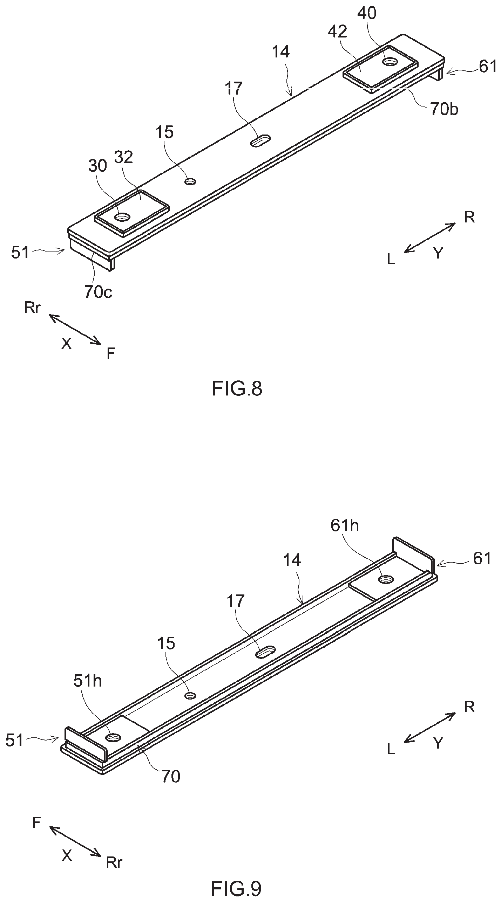

FIG. 10 is a schematic view that is for explaining the sealing plate 14 in accordance with the present embodiment. As shown in FIG. 10, on a surface of the sealing plate 14, recessed parts 4 corresponding to the protruding parts 5 exist. The recessed part 4 here is provided not to penetrate an opposite side surface. The sealing plate 14 and the insulating member 70 are fixed by fitting the recessed parts 4 of the sealing plate 14 and the protruding parts 5 of the insulating member 70. Here, FIG. 8 is a perspective view that schematically shows the sealing plate 14, to which the positive electrode terminal 30, the negative electrode terminal 40, the positive electrode first electrical collector part 51, the negative electrode first electrical collector part 61, and the insulating member 70 are attached, and FIG. 9 is a perspective view in which the sealing plate 14 shown in FIG. 8 is reversed.

Next, the insulation sheet 29 in accordance with the present embodiment will be described in details. FIG. 13 is a schematic development view that is for explaining about the insulation sheet 29. FIG. 14 is a schematic perspective view in a case where the insulation sheet 29 is arranged to cover the electrode body group 20 of FIG. 5.

As shown in FIG. 13, the insulation sheet 29 in accordance with the present embodiment includes a sheet bottom wall 29a, a pair of sheet first side walls 29b that extend from the sheet bottom wall 20a and are opposed mutually, and a pair of sheet second side walls 29c that extend from the sheet bottom wall 29a and are opposed mutually (FIG. 13 shows a state of a sheet second side wall forming part 29c' before the sheet second side wall is constructed). The sheet bottom wall 29a here is formed in a rectangular shape. In addition, as shown in FIG. 4 and FIG. 13, the sheet second side wall 29c is configured with a pair of sheet second side wall forming parts 29c' and can be constructed by performing heat welding, tape attachment, or the like, to join the end parts of the sheet second side wall forming parts 29c'. For example, insulation sheets 129, 429, 529, 629 described later can be also constructed, in reference to the construction method of the insulation sheet 29. In addition, as shown in FIG. 4, the sheet second side wall forming parts 29c' in the present embodiment are joined to each other with no gap in the Y direction, by which the present disclosure is not restricted, and thus, the sheet second side wall forming parts might be joined, for example, with a gap. The size of the gap, in a case where the gap exists as described above, is not particularly restricted if the effect of the technique herein disclosed is implemented. The size of the gap as described above is approximately equal to or less than 3 mm, and can be set, for example, to be equal to or less than 2 mm or to be equal to or less than 1 mm.

In addition, the inner surface of the sheet second side wall 29c (for more details, sheet second side wall forming part 29c) in the present embodiment is configured to contact with the outer surface of the positive electrode second electrical collector part 52, which does not restrict the present disclosure. A gap might exist between the inner surface of the sheet second side wall 29c and the outer surface of the positive electrode second electrical collector part 52. Incidentally, the area size of the sheet second side wall forming part 29c' in the present embodiment is configured to be smaller than the area size of the sheet second side wall 29c, which does not restrict the present disclosure. The area size of the sheet second side wall forming part 29c' might be the same as the area size of the sheet second side wall 29c. For example, in the former case, it is possible to adjust a holding force to the electrode body when the sheet second side wall forming parts are joined to each other, and thus it is preferable.

As shown in FIG. 14, a length P (see FIG. 11) of the short side of the wide width surface 70a included by the insulating member 70 in the present embodiment is configured to be the same as a thickness Q (see FIG. 5) of the electrode body (here, the electrode body group 20), which does not restrict the present disclosure. For example, from a perspective of firmly fixing the insulation sheet 29 and the electrode body group 20, it is preferable that the length P of the short side is smaller than the thickness Q of the electrode body. As described above, when the length P of the short side is smaller than the thickness Q of the electrode body, a portion of the insulation sheet 29 at the sealing plate side becomes a narrow shape. By doing this, it is possible, for example, to further suitably inhibit the electrode body group 20 from being deviated from a predetermined arranged position by an external force applied in the longitudinal direction Y of the electrode body group 20, and thus it is possible to further suitably inhibit the damage on the electrode tab group (here, the positive electrode tab group 23 and the negative electrode tab group 25). In addition, in this case, a ratio of the short side length P to the electrode body thickness Q (length P of short side/thickness Q of electrode body) can be within a range approximately from 0.5 to 0.9 (for example, from 0.7 to 0.8).

A length R of the short side on the sheet bottom wall 29a (see FIG. 13) included by the insulation sheet 29 in the present embodiment is configured to be the same as the thickness Q (see FIG. 5) of the electrode body (here, the electrode body group 20), which does not restrict the present disclosure. For example, from a perspective of firmly fixing the insulation sheet 29 and the electrode body group 20, it is further preferable that the short side length R is smaller than the electrode body thickness Q. As described above, when the short side length R is smaller than the electrode body thickness Q, a portion of the insulation sheet at the bottom wall side becomes a narrow shape. By doing this, it is possible, for example, to further suitably inhibit the electrode body group 20 from being deviated from a predetermined arranged position by an external force applied in the longitudinal direction Y of the electrode body group 20, and thus it is possible to further suitably inhibit the damage on the electrode tab group (here, the positive electrode tab group 23 and the negative electrode tab group 25). In the above described case, a ratio of the short side length R to the electrode body thickness Q (short side length R/electrode body thickness Q) can be within a range approximately from 0.5 to 0.9 (for example, from 0.7 to 0.8).

Incidentally, "thickness of electrode body" means, for example, the total thickness of the plural electrode bodies when the plural electrode bodies exist inside the battery case (see Q in FIG. 5), and means, for example, the thickness of single electrode body when one electrode body exists. In addition, regarding the herein disclosed insulation sheet, for example, it might be allowed that a portion of the insulation sheet at the sealing plate side is formed in a narrow shape and a portion of the insulation sheet at the bottom wall side is formed in a narrow shape.

In the present embodiment, the insulating member 70 and the insulation sheet 29 are joined via a join part 1 and a join part 1. Additionally, in the present embodiment, at least a part of the join part 1 for the insulating member 70 and the insulation sheet 29 exists within a range equal to or less than (1/4) L in a direction from a center part (center line CL) of the electrode body 20a along the first side wall 12b (see FIG. 14) when a length of the electrode body 20a in a direction (Y direction in FIG. 2) along said first side wall 12b is treated as L. By the aspect as described above, it is possible to fix the insulation sheet 29 at a position close to the center part of the electrode body 20a, and to suitably inhibit the deflection of the insulation sheet 29, and thus it is preferable. It is further preferable that said join part 1 exists within a range equal to or less than (1/5) L from the center part (center line CL) of the electrode body 20a in said surface direction, or it is furthermore preferable that said join part exists within a range equal to or less than (1/6) L from the center part (center line CL) of the electrode body 20a in said surface direction. Incidentally, while the insulating member 70 and the insulation sheet 29 in the present embodiment are joined via the join part 1 and join part 1', joining might be performed, for example, to the sealing plate by heat welding, ultrasonic welding, or the like. Alternatively, a recessed part or a protruding part might be formed on a predetermined position at the insulating member side and the protruding part and the recessed part formed at the insulation sheet side might be subjected to recession/protrusion fitting so as to be fixed.

In the present embodiment, the join part 1 and the join part 1' are configured to be adhesion layers. Regarding a material configuring the adhesion layer as described above, it is possible to use, for example, a fluorine resin, such as polyvinylidene fluoride (PVDF) and polytetrafluoroethylene (PTFE), an acrylic resin, a polyamide resin, a polyimide resin, a polyurethane resin, or the like, which is not particularly restricted if the effect of the technique herein disclosed is implemented. In addition, from a perspective of facilitating the join to the insulating member 70 of the insulation sheet 29, various adhesive agents (e.g., pressure sensitive adhesion agent) can be preferably used as said material. As said adhesive agent, it is possible to use, for example, an acrylic adhesive agent, a rubber type adhesive agent, a silicon type adhesive agent, an urethane type adhesive agent, or the like. Alternatively, said resin material might be a light curable resin (e.g., acrylic resin having light curable property), or a thermosetting resin (e.g., acrylic resin having thermosetting property). Additionally, although the join part 1 and the join part 1' are formed on the insulation sheet 29 in the present embodiment, the present disclosure is not restricted to this configuration, and the join part might be formed, for example, at the insulating member side. Incidentally, even for join parts 101, 101', 101", 201, 301, 401, 401', 501, 501' described later, it is possible to use the material as described above.

Although the join parts 1 are provided intermittently in the present embodiment, the present disclosure is not restricted to this configuration, and the join parts might be provided, for example, continuously. In addition, area sizes of areas where the join part 1 and the join part 1' are formed are not particularly restricted if the effect of the technique herein disclosed is implemented. Although not restricting the present disclosure, the area size of the area where the join part 1 is formed (the total area sizes of them if a plurality of join parts 1 exist) on one sheet first side wall among a pair of sheet first side walls 29b can be within a range approximately from 20 to 90% (for example, from 40 to 60%) of the area size of one side wall 70b of the insulating member 70. Incidentally, a similar configuration can be applied to the other sheet first side wall, too. In addition, the area size of the area where the join part 1' is formed (the total area sizes of them if a plurality of join parts 1' exist) on one sheet second side wall forming part among two sheet second side wall forming parts 29c' configuring the sheet second side wall 29c can be within a range approximately from 20 to 90% (for example, from 40 to 60%) of the area size of one side wall 70c of the insulating member 70. Incidentally, a similar configuration can be applied to the other sheet second side wall forming part, too. In addition, the thicknesses of the join part 1 and the join part 1' can be suitably decided on the basis of the used form. Incidentally, join parts 101, 201, 301, 401, 501 described later can be configured similarly to the join part 101. Then, join parts 101', 401', 501' described later can be configured similarly to the join part 101'.

### <Manufacturing method of battery 100>

A manufacturing method of the battery 100 is characterized by using the insulating member 70 and the insulation sheet 29 as described above. The other manufacturing processes might be similar to conventional processes. The battery 100 can be manufactured by preparing, in addition to the insulating member 70 and the insulation sheet 29, the battery case 10 (the outer package 12 and the sealing plate 14) as described above, the electrode body group 20 (the electrode bodies 20a, 20b, 20c), the electrolyte, the positive electrode terminal 30, the negative electrode terminal 40, the positive electrode electrical collector part 50 (the positive electrode first electrical collector part 51 and the positive electrode second electrical collector part 52), and the negative electrode electrical collector part 60 (the negative electrode first electrical collector part 61 and the negative electrode second electrical collector part 62), and then by performing a manufacturing method that includes, for example, a first attaching step, a second attaching step, an insulation sheet joining step, an insertion step, and a sealing step. In addition, the herein disclosed manufacturing method might further include a different step at an arbitrary stage.

At the first attaching step, a first combined product as shown in FIG. 8 and FIG. 9 is manufactured. In particular, at first, the positive electrode terminal 30, the positive electrode first electrical collector part 51, the negative electrode terminal 40, the negative electrode first electrical collector part 61, and the insulating member 70 are attached to the sealing plate 14.

For example, a caulking process (riveting) is used to fix the positive electrode terminal 30, the negative electrode terminal 40, the positive electrode first electrical collector part 51, the negative electrode first electrical collector part 61, and the insulating member 70, to the sealing plate 14. The caulking process is performed with the gaskets 90 respectively sandwiched between the outside surface of the sealing plate 14 and the positive electrode terminal 30 and negative electrode terminal 40, and further with the insulating members 70 respectively sandwiched between the inside surface of the sealing plate 14 and the positive electrode first electrical collector part 51 and negative electrode first electrical collector part 61. At that time, the recessed part 4 included by the sealing plate 14 and the protruding part 5 included by the insulating member 70 are fit so as to fix the sealing plate 14 and the insulating member 70. A material of the gasket 90 might be similar to a material of the insulating member 70. The positive electrode terminal 30, before the caulking process, is inserted from a position upward the sealing plate 14 into a penetration hole of the gasket 90, a terminal taking out hole 18 of the sealing plate 14, a penetration hole of the insulating member 70, and a penetration hole 51h of the positive electrode first electrical collector part 51 in this order, so as to protrude to a position downward the sealing plate 14. In addition, the negative electrode terminal 40, before the caulking process, is inserted from a position upward the sealing plate 14 into a penetration hole of the gasket 90, a terminal taking out hole 19 of the sealing plate 14, a penetration hole of the insulating member 70, and a penetration hole 61h of the negative electrode first electrical collector part 61 in this order, so as to protrude to a position downward the sealing plate 14. Then, to apply a compression force for the vertical direction Z, portions of the positive electrode terminal 30 and negative electrode terminal 40 protruding to positions downward the sealing plate 14 are caulked. By doing this, a caulked part 30c is formed at a tip end part of the positive electrode terminal 30 (lower end part in FIG. 2), and a caulked part 40c is formed at a tip end part of the negative electrode terminal 40 (lower end part in FIG. 2).

By performing the caulking process as described above, the gasket 90, the sealing plate 14, the positive electrode first electrical collector part 51, the negative electrode first electrical collector part 61, and the insulating member 70 are integrally fixed to the sealing plate 14, and further the terminal taking out holes 18 and 19 are sealed. Incidentally, the caulked part 30c and the caulked part 40c might be respectively welded and joined to the positive electrode first electrical collector part 51 and the negative electrode first electrical collector part 61. By doing this, it is possible to further enhance the conduction reliability.

Then, the positive electrode outside electrically conductive member 32 and the negative electrode outside electrically conductive member 42 are attached to the outside surface of the sealing plate 14 via the outside insulating member 92. Incidentally, the material of the outside insulating member 92 might be similar to the positive electrode insulating member 70. In addition, the timing for attaching the positive electrode outside electrically conductive member 32 and the negative electrode outside electrically conductive member 42 might be after the insertion step (for example, after the liquid injection hole 15 is sealed).

In the second attaching step, the first combined product manufactured at the first attaching step is used so as to manufacture a second combined product as shown in FIG. 5. In other words, the electrode body group 20 integrated with the sealing plate 14 is manufactured. In particular, at first, as shown in FIG. 6, three electrode bodies 20a are prepared, while the positive electrode second electrical collector part 52 and the negative electrode second electrical collector part 62 are attached to each electrode body, and then the three electrode bodies are treated as electrode bodies 20a, 20b, 20c to be aligned for arrangement in the short side direction X. At that time, each of the electrode bodies 20a, 20b, 20c might be aligned in parallel with the positive electrode second collector part 52 being arranged at one side (left side in FIG. 5) in the long side direction Y and with the negative electrode second collector part 62 being arranged at the other side (right side in FIG. 5) in the long side direction Y.

Next, as shown in FIG. 4, while being in a state where the plurality of positive electrode tabs 22t are bent, the positive electrode first electrical collector part 51 fixed to the sealing plate 14 and the positive electrode second collector part 52 of the electrode bodies 20a, 20b, 20c are respectively joined. In addition, while being in a state where the plurality of negative electrode tabs 24t are bent, the negative electrode first electrical collector part 61 fixed to the sealing plate 14 and the negative electrode second collector part 62 of the electrode bodies 20a, 20b, 20c are respectively joined. As the joining method, for example, it is possible to use welding, such as ultrasonic welding, resistance welding, and laser welding. Particularly, it is preferable to use welding with the high energy ray irradiation, such as laser.

Next, in the insulation sheet joining step, the insulation sheet 29 is joined to the insulating member 70 included by the sealing plate 14. In particular, at first, a resin-made sheet shown in FIG. 13 is used to construct the insulation sheet 29. Then, the constructed insulation sheet 29 is joined to a predetermined position of the insulating member 70 via the join part 1 and the join part 1'. By doing this, it is possible to join the insulation sheet 29 and the insulating member 70. Incidentally, although the previously constructed insulation sheet 29 is used to cover the electrode body group 20 in the present embodiment, this does not restrict the present disclosure. For example, the insulation sheet is used to cover the electrode body group, and then end parts of the sheet second side wall forming parts are joined, so as to construct the insulation sheet.

In the insertion step, the second combined product manufactured at the second attaching step is accommodated in the internal space of the outer package 12. FIG. 15 is a cross section view that schematically explains the insertion step. In particular, the electrode body group 20 covered by the insulation sheet 29 is inserted into the outer package 12. In a case where the weight of the electrode body group 20 is heavy, in a case where the weight is approximately equal to or more than 1 kg, for example, equal to or more than 1.5 kg, or further 2 to 3 kg, as shown in FIG. 15, arrangement might be performed to make the longer side wall 12b of the outer package 12 cross the gravity direction (make the outer package 12 be placed sideways) so as to insert the electrode body group 20 into the outer package 12.

In the sealing step, the sealing plate 14 is joined to the edge part of the opening part 12h of the outer package 12 so as to seal the opening part 12h. The sealing step can be performed at the same time of performing the insertion step or after the insertion step. In the sealing step, it is preferable that the outer package 12 and the sealing plate 14 are welded and joined. Regarding welding and joining the outer package 12 and the sealing plate 14, it is possible, for example, to use laser welding, or the like. After that, the electrolyte is injected from the liquid injection hole 15, and then the liquid injection hole 15 is covered by the sealing member 16, so as to tightly seal the battery 100. As described above, it is possible to manufacture the battery 100.

Although the battery 100 can be used for various purposes, it is possible to suitably use the battery for a purpose, for example, in which an external force, such as vibration and impact, might be applied, and thus, for example, it is possible to suitably use the battery as a power source (power supply for driving) for a motor mounted on a movable body (typically a vehicle, such as passenger car and truck). The kind of the vehicle is not particularly restricted, but it is possible to use it, for example, on a plug-in hybrid electric vehicle (PHEV), a hybrid electric vehicle (HEV), a battery electric vehicle (BEV), or the like. Regarding the battery 100, it is also possible to arrange a plurality of batteries 100 in a predetermined arrangement direction and then to apply a load from the arrangement direction by a binding mechanism so as to suitably implement a battery pack.

### <Another embodiment >

Some embodiments of the present disclosure are explained above, but the above described embodiments are merely examples. The present disclosure can be implemented in various other forms. The present disclosure can be executed based on the contents disclosed in the present specification, and the technical common sense in the present field. The technique recited in the appended claims includes variously deformed or changed versions of the embodiments that have been illustrated above. For example, one part of the above described embodiment can be replaced with another deformed aspect, and furthermore another deformed aspect can be added to the above described embodiment. In addition, unless a technical feature is explained to be essential, this technical feature can be appropriately deleted.

For example, although the insulation sheet 29 in the above described embodiment includes the sheet bottom wall 29a, the pair of sheet first side walls 29b, and the pair of sheet second side walls 29c, this does not restrict the present disclosure. The herein disclosed insulation sheet might include, for example, only the sheet bottom wall 29a and the pair of sheet first side walls 29b.

For example, although the join part 1 and the join part 1' in the above described embodiment are formed in rectangular shapes, this does not restrict the present disclosure. The shapes of the join part 1 and the join part 1' can be various shapes, for example, circular shapes, oval shapes, triangle shapes, or the like, or further might be combination of them. In addition, for example, although the join parts 101' are formed on both sheet second side wall forming parts among two sheet second side wall forming parts 29c' configuring the sheet second side wall 29c in the above described embodiment, this does not restrict the present disclosure. The join part 101' might be formed on one of the above described two sheet second side wall forming parts 29c'.

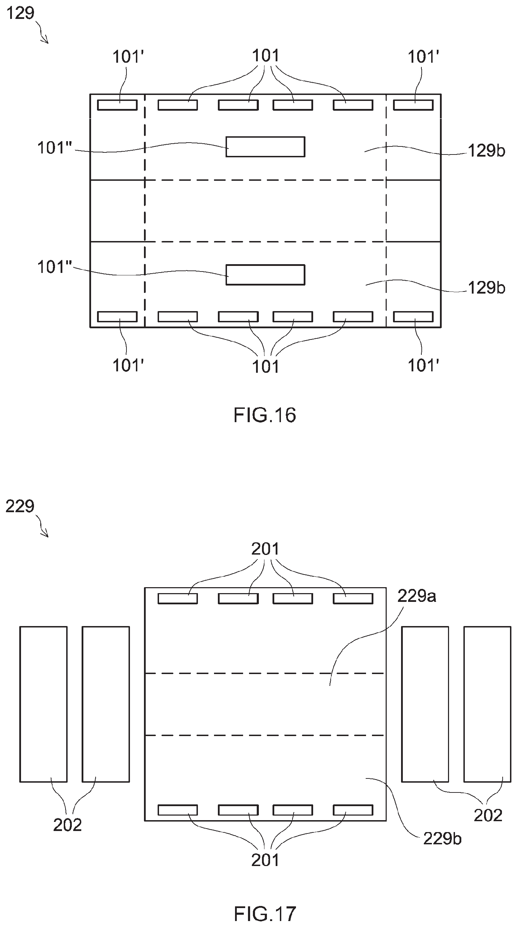

FIG. 16 is a schematic development view that is for explaining the insulation sheet 129 in accordance with Embodiment 2. As shown in FIG. 16, on a sheet first side wall 129b included by the insulation sheet 129, a join part 101" is further formed in addition to the join part 101 and the join part 101'. In accordance with such a configuration, it is possible to join at least a part of the insulation sheet 129 to the electrode body (here, the electrode bodies 20a, 20c). In that case, the insulation sheet 129 and the electrode body group 20 are more firmly fixed, and thus it is possible, for example, to suitably inhibit the electrode body group 20 from being deviated from a predetermined arranged position by an external force applied in the longitudinal direction Y of the electrode body group 20. By doing this, it is possible to suitably inhibit the damage on the electrode tab group (here, the positive electrode tab group 23 and the negative electrode tab group 25).

Incidentally, although the insulation sheet and the electrode body are joined via the join part 101" in the above described Embodiment 2, this does not restrict the present disclosure. For example, in a case where a separator on an outermost surface included by the electrode body includes an adhesion layer, it is possible to fix the insulation sheet and the electrode body via the adhesion layer.

FIG. 17 is a development view of the insulation sheet 229 in accordance with Embodiment 3 and is a schematic view that is for explaining a fixing member. As shown in FIG. 17, the insulation sheet 229 includes a sheet bottom wall 229a, and a pair of sheet first side walls 229b extending from the sheet bottom wall 229a and being opposed mutually. Additionally, in Embodiment 3, fixing members 202 are arranged from one sheet first side wall to the other sheet first side wall among the pair of sheet first side walls 229b. In accordance with such a configuration, it is possible with the fixing members 202 to individually fix an electrical collector area S (see FIG. 2) where the positive electrode tab group 23 or the negative electrode tab group 25 exists, and a non electrical collector area T (see FIG. 2) where neither the positive electrode tab group 23 nor the negative electrode tab group 25 exists. In this case, for example, it is possible to decrease the holding force of the fixing member 202 on the electrical collector area S where the positive electrode tab group 23 or negative electrode tab group 25 exists, and to increase the holding force of the fixing member 202 on the non electrical collector area T where neither the positive electrode tab group 23 nor the negative electrode tab group 25 exists, and thus, it is possible to firmly fix the insulation sheet 229 and the electrode body group 20 while the damages on the positive electrode tab group 23 and the negative electrode tab group 25 can be suitably inhibited. By doing this, it is possible to suitably inhibit the damage on the electrode tab group (here, the positive electrode tab group 23 and the negative electrode tab group 25).

As the fixing member 202 described above, it is possible to preferably use a member that includes, for example, a base material and an adhesion layer formed on the base material. As an example of the base material described above, it is possible to use polyethylene (PE), polypropylene (PP), polyester, nylon, vinyl chloride, Teflon (registered trademark), polyimide, kapton (registered trademark), polyphenylene sulfide, polyethylene naphthalate, or the like. A thickness of the base material described above, which is not particularly restricted if the effect of the technique herein disclosed is implemented, is approximately 5 µm to 100 µm, and can be, for example, 10 µm to 50 µm. In addition, as an example of a material configuring the adhesion layer, it is possible to use an acrylic adhesion material, a silicon type adhesion material, a rubber adhesion material, or the like. It is preferable that the adhesion layer described above has an adhesive property at a room temperature (typically, about 20 °C). A thickness of the adhesion layer described above, which is not particularly restricted if the effects of the technique herein disclosed are implemented, is approximately 5 µm to 100 µm, and can be, for example, 5 µm to 20 µm. Incidentally, a similar configuration can be applied to a fixing member, such as the fixing member 302, too.

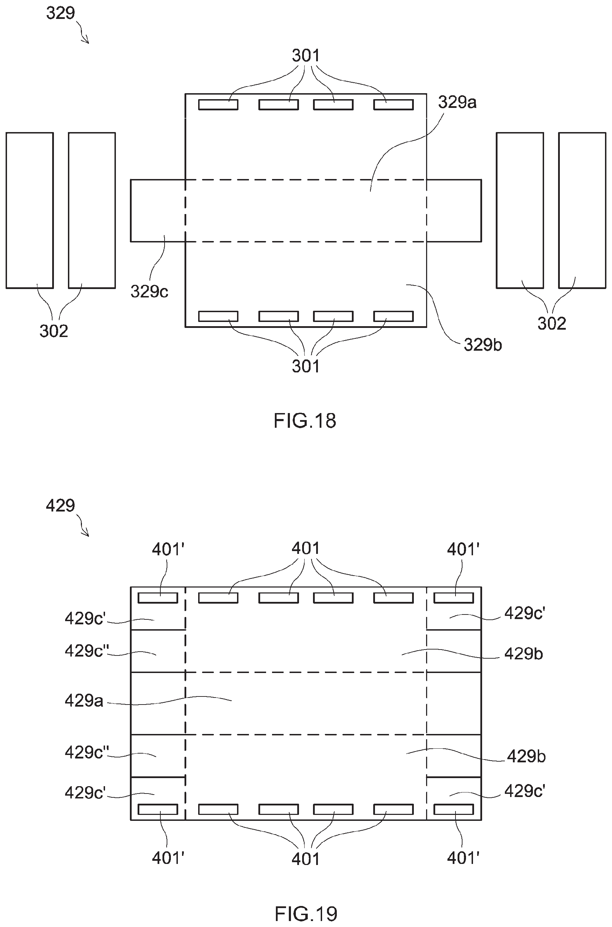

FIG. 18 is a development view of the insulation sheet 329 in accordance with Embodiment 4, and is a schematic view that is for explaining a fixing member. As shown in FIG. 18, the insulation sheet 329 includes a sheet bottom wall 329a, a pair of sheet first side walls 329b that expend from the sheet bottom wall 329a and that are opposed mutually, and a pair of sheet second side walls 329c that extend from the sheet bottom wall 329a and that are opposed mutually. Additionally, in Embodiment 4, a fixing member 302 is arranged from one sheet first side wall to the other sheet first side wall among the pair of sheet first side walls 329b. In accordance with such a configuration, it is possible to implement an effect as explained in above described Embodiment 3.

Incidentally, even in Embodiment 1 or Embodiment 2, it is possible to arrange a fixing member as explained in Embodiment 3 or Embodiment 4. In accordance with such a configuration, it is possible to implement an effect as explained in above described Embodiment 3. In addition, although the sheet second side wall portion is covered by two fixing members in the above described embodiment, the present disclosure is not restricted to this configuration, and, for example, the sheet second side wall portion might be covered by one fixing member, or by three or more fixing members. Then, in a case where three or more fixing members are used, sizes of respective fixing members might be the same or different from each other.

FIG. 19 is a schematic development view that is for explaining the insulation sheet 429 in accordance with Embodiment 5. As shown in FIG. 19, the insulation sheet 429 includes a sheet bottom wall 429a, a pair of sheet first side walls 429b, and a pair of sheet second side walls (FIG. 19 shows a state of sheet second side wall forming parts 429c', 429c" before constructing the sheet second side wall). The sheet second side wall is separated into an electrical collector area configured with a pair of sheet second side wall forming parts 429c' and into a non electrical collector area configured with a pair of sheet second side wall forming parts 429c". In accordance with such a configuration, it is possible to independently adjust the holding force of the electrical collector area and the holding force of the non electrical collector area. By doing this, it is possible to firmly fix the insulation sheet 429 and the electrode body group 20 while the damages on the positive electrode tab group 23 and the negative electrode tab group 25 can be suitably inhibited, and thus, it is possible suitably inhibit the damage on the electrode tab group (here, the positive electrode tab group 23 and the negative electrode tab group 25).

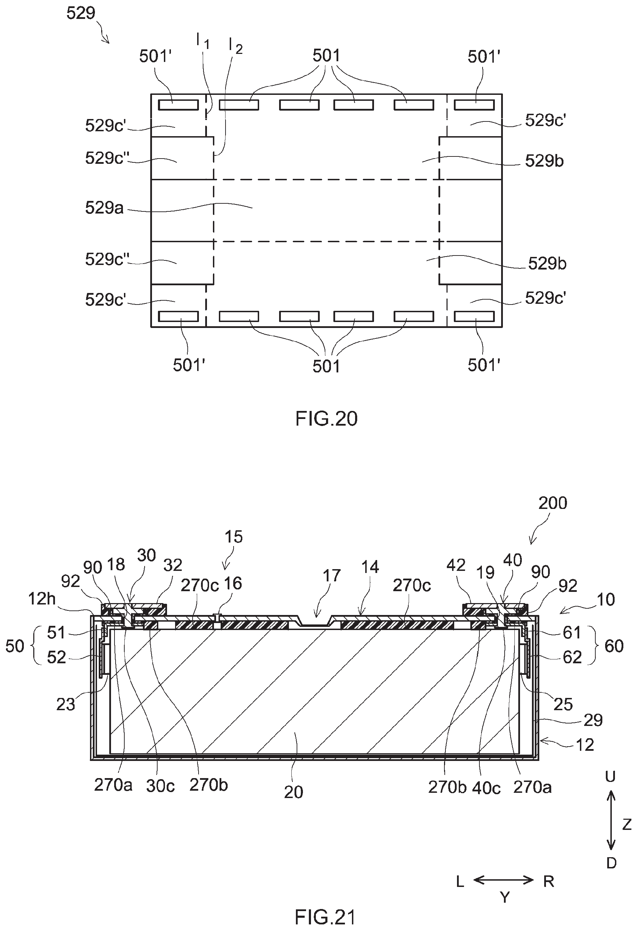

FIG. 20 is a schematic development view that is for explaining the insulation sheet 529 in accordance with Embodiment 6. As shown in FIG. 20, the insulation sheet 529 includes a sheet bottom wall 529a, a pair of sheet first side walls 529b, and a pair of sheet second side walls (FIG. 20 shows a state of sheet second side wall forming parts 529c', 529c" before constructing the sheet second side wall). The sheet second side wall is separated into an electrical collector area configured with a pair of sheet second side wall forming parts 529c' and into a non electrical collector area configured with a pair of sheet second side wall forming parts 529c". In accordance with such a configuration, it is possible to independently adjust the holding force of the electrical collector area and the holding force of the non electrical collector area. In addition, as shown in FIG. 20, a valley fold line 11 for 529c' and a valley fold line l2 for 529c" are formed to be deviated from each other. By doing this, it is possible to firmly fix the insulation sheet 529 and the electrode body group 20 while the damage on the electrode tab group (here, the positive electrode tab group 23 and the negative electrode tab group 25) are suitably inhibited.

Incidentally, even in Embodiments 5 to 6, it is possible to arrange a fixing member as explained in Embodiment 3 or Embodiment 4. Additionally, in Embodiment 5, it is possible to omit the pair of sheet second side wall forming parts 429c' or the pair of sheet second side wall forming parts 429c" configuring the sheet second side wall of the insulation sheet 429. In that case, a fixing member might be arranged at the portion where the sheet second side wall forming parts are omitted. Similar configuration can be applied to Embodiment 6, too.

For example, in Embodiments 1 to 6 described above, the electrode body group 20 is covered by the insulation sheet, but the present disclosure is not restricted to these configurations, and, for example, each of the electrode bodies 20a, 20b, 20c configuring the electrode body group 20 can be individually covered by the insulation sheet.

In addition, the shape and configuration of the insulating member are not particularly restricted if the effect of the technique herein disclosed is implemented. FIG. 21 is a schematic view that is for explaining a battery 200 in accordance with another embodiment. As shown in FIG. 21, an insulating member might be configured separately, for example, to be 270a, 270b, and 270c.

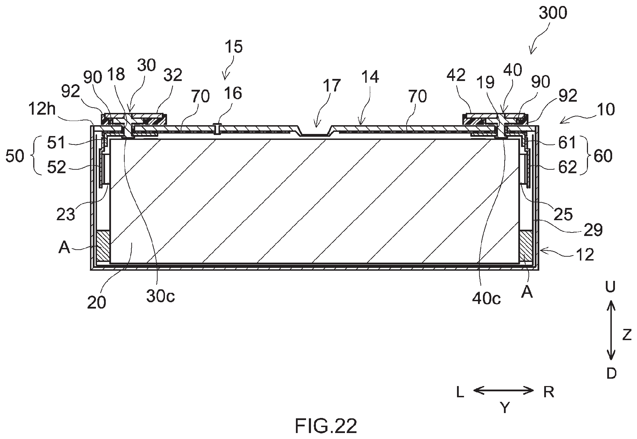

FIG. 22 is a schematic view that is for explaining a battery 300 in accordance with another embodiment. As shown in FIG. 22, a move regulation member A might be arranged between the sheet second side wall of the insulation sheet 29 and the electrode body group 20. In accordance with such a configuration, for example, it is possible to further suitably inhibit the electrode body group 20 from being deviated from a predetermined arranged position by an external force applied in the longitudinal direction Y of the electrode body group 20. By doing this, it is possible to further suitably inhibit the damage on the electrode tab group (here, the positive electrode tab group 23 and the negative electrode tab group 25). Incidentally, a material configuring the move regulation member A is not particularly restricted if the effect of the technique herein disclosed is implemented, but might be, for example, a material configuring the insulating member 70, or the like. Additionally, even in Embodiments 2 to 6, a fixing member as described above can be arranged.

## Claims

1. A battery (100), comprising:
one or plural electrode bodies (20a, 20b, 20c) provided with a positive electrode (22) and a negative electrode (24); and
a battery case (10) configured to accommodate the electrode body (20a, 20b, 20c),
wherein the battery case (10) comprises:
an outer package (12) that includes a bottom wall (12a), a pair of first side walls (12b) configured to extend from the bottom wall (12a) and to be opposed mutually, a pair of second side walls (12c) configured to extend from the bottom wall (12a) and to be opposed mutually, and an opening part (12h) configured to be opposed to the bottom wall (12a); and
a sealing plate (14) configured to seal the opening part (12h),
a positive electrode terminal (30) and a negative electrode terminal (40) are attached to the sealing plate (14),
the electrode body (20a, 20b, 20c) comprises:
a positive electrode tab group (23) that is configured to protrude from an end part opposed to one second side wall (12c) among the pair of second side walls (12c); and
a negative electrode tab group (25) that is configured to protrude from an end part opposed to another second side wall (12c) among the pair of second side walls (12c),
the positive electrode tab group (23) and the positive electrode terminal (30) are electrically connected via a positive electrode electrical collector part (50),
the positive electrode tab group (23) is joined to the positive electrode electrical collector part (50) in a state of being bent to arrange a part of the positive electrode tab group (23) along the one second side wall (12c),
the negative electrode tab group (25) and the negative electrode terminal (40) are electrically connected via a negative electrode electrical collector part (60),
the negative electrode tab group (25) is joined to the negative electrode electrical collector part (60) in a state of being bent to arrange a part of the negative electrode tab group (25) along the another second side wall (12c),
an insulating member (70) is provided on the sealing plate (14),
an insulation sheet (29) is joined to the insulating member (70) and is arranged to cover the electrode body (20a, 20b, 20c),
the insulation sheet (29) comprises:
at least a sheet bottom wall (29a); and
a pair of sheet first side walls (29b) that are configured to extend from the
sheet bottom wall (29a) and are opposed mutually, and
the pair of sheet first side walls (29b) are opposed to the pair of first side walls (12b),
wherein the insulating member (70) comprises a wide width surface (70a) formed in a rectangular shape, and
a length (P) of a short side of the wide width surface (70a) is smaller than a thickness of the electrode body (20a, 20b, 20c).

2. The battery according to claim 1,
wherein the insulation sheet (29) further comprises a sheet second side wall (12c) that is arranged between the pair of second side walls (29c) and the electrode body (20a, 20b, 20c).

3. The battery according to claim 2,
wherein the sheet second side wall is separated into an electrical collector area (S) where the positive electrode tab group (23) or the negative electrode tab group (25) exists, and into a non electrical collector area (T) where neither the positive electrode tab group (23) nor the negative electrode tab group (25) exists.

4. The battery according to any one of claims 1 to 3,
wherein the sheet bottom wall (29a) is formed in a rectangular shape, and
a length (R) of a short side of the sheet bottom wall (29a) is smaller than a thickness of the electrode body (20a, 20b, 20c).

5. The battery according to any one of claims 1 to 4,
wherein at least a part of the insulation sheet (129) is joined to the electrode body (20a, 20b, 20c).

6. The battery according to any one of claims 1 to 5,
wherein for each of the pair of sheet first side walls (229b), a fixing member (202) is arranged from one sheet first side wall (229b) to another sheet first side wall (229b).

7. The battery according to any one of claims 2 to 6,
wherein a move regulation member (A) is arranged between the sheet second side wall (29c) and the electrode body (20a, 20b, 20c).

8. The battery according to any one of claims 1 to 7,
wherein the insulating member (70) is arranged between the positive electrode electrical collector part (50) and the negative electrode electrical collector part (60), and the sealing plate (14).

9. The battery according to any one of claims 1 to 8,
wherein the insulating member (70) is fixed to the sealing plate (14) by adhesion or fitting.
